# EUROPÄISCHE PATENTSCHRIFT

(11) **EP 0 957 570 B1**
(45) Veröffentlichungstag und Bekanntmachung des Hinweises auf die Patenterteilung: **19.02.2003**
(21) Anmeldenummer: 99108904.6
(22) Anmeldetag: 05.05.1999
(51) Int. Cl.: H02P 1/46

(54) **Vorrichtung zum Steuern eines Einphasen-Synchronmotors**
Device for controlling a single phase synchronous motor
Dispositif pour commander un moteur synchrone monophasé

(30) Priorität: 09.05.1998 DE 19820929
(43) Veröffentlichungstag der Anmeldung: 17.11.1999
(73) Patentinhaber: Diehl AKO Stiftung & Co. KG, 88239 Wangen im Allgäu (DE)
(72) Erfinder: Zeh, Stefan Dipl.-Ing., 88299 Leutkirch (DE); Oljaca, Miroslav Dipl.-Ing., 21040 Gerenzano (IT)
(74) Vertreter: Hofmann, Gerhard, Dipl.-Ing. Patentassessor

(56) Entgegenhaltungen:
- EP-A- 0 654 890
- EP-A- 0 695 020
- EP-A- 0 872 949
- US-A- 4 409 532

## Beschreibung

Die Erfindung betrifft eine Vorrichtung zum Steuern des Anlaufs und des Betriebs eines nicht selbstanlaufenden Einphasen-Synchronmotors nach dem Oberbegriff des Anspruchs 1.

Eine derartige Einrichtung ist zum Starten eines Einphasen-Synchronmotors nötig, der aufgrund seiner vergleichsweisen hohen Leistung, beispielsweise >50 Watt, bauartbedingt beim Anlegen des Wechselspannungsnetzes nicht von selbst anläuft und der in einer bestimmten Drehrichtung anlaufen soll. Solche Synchronmotoren werden beispielsweise bei Haushaltsmaschinen, insbesondere für Wasserpumpen von Geschirrspülmaschinen, verwendet.

Eine Vorrichtung der eingangs genannten Art ist aus der EP 0 654 890 B1 bekannt. Dort ist zur Erfassung der jeweiligen Stellung des Rotors ein Stellungssensor nötig, der beispielsweise ein Hallsensor ist. In Abhängigkeit vom Sensorsignal und der jeweiligen Polarität der Wechselspannung wird der Schalter (Triac) gezündet, wenn der auf der geschalteten Wechselspannung beruhende Strom bei der jeweiligen Ausrichtung des Magnetfeldes des Rotors ein Drehmoment in Richtung der gewünschten Drehrichtung ergibt.

Ein Stellungssensor ist im Hinblick auf den Aufbau und die Montage aufwendig. Denn er muß im Motor integriert sein und mit der Steuerelektronik verbunden werden.

Weitere Vorrichtungen der eingangs genannten Art, die ebenfalls mit Stellungssensoren arbeiten, sind aus der EP 0 574 823 A2, der EP 0 682 404 A2 und der DE 195 33 344 A1 bekannt.

In der EP 0 661 732 B1 ist ein Wechselrichter für einen Einphasen-Synchronmotor beschrieben, der beispielsweise für den Pumpenantrieb in einem Geschirrspüler verwendbar ist.

Aus der DE 40 33 121 A1 ist eine Vorrichtung zum Starten eines elektrischen Einphasen-Synchronmotors bekannt, der nur für vergleichsweise kleine Leistungen ausgelegt und dabei selbstanlaufend ist. Die DE 40 33 121 A1 beschreibt eine Möglichkeit, einen Synchronmotor in gewünschter Drehrichtung ohne mechanische Rücklaufsperre zu starten. Für nicht selbstanlaufende Synchronmotoren ist diese Vorrichtung ungeeignet, da solche aufgrund ihrer Massenträgheit nicht auf Solldrehzahl beschleunigt werden können und mit kleinen Hin- und Herbewegungen mit Netzfrequenz stehenblieben.

In der EP 0 495 611 A2 ist eine Vorrichtung zum Starten eines 3-phasigen Motors für eine Magnetplatte beschrieben. Nur zur Steuerung der Solldrehzahl wird die in den Wicklungen induzierte Spannung bzw. die elektromotorische Kraft ausgewertet.

Aus der US 4 409 532 ist eine Steuerung zum Starten eines Motors mit Hilfswicklung bekannt. Ein Einphasen-Synchronmotor mit Permanentmagnet und Rotor läßt sich mit dieser Steuerung nicht starten; insbesondere wenn, wie dies bei Wasserpumpen von Geschirrspülmaschinen der Fall ist, ein großer Luftspalt zwischen dem Stator und dem Rotor gewünscht ist, um den Rotor direkt im Wasserkreis anordnen zu können, wodurch andernfalls notwendige Dichtungen entfallen.

Aus der DE 44 18 721 A1 ist ein Steuerungsverfahren für eine Laugenumwälzpumpe einer Geschirrspülmaschine bekannt. Es soll das kontinuierliche Fördern der nicht selbstansaugenden Pumpe überwacht werden.
Drehzahlschwankungen sowie Schwankungen des Motorstroms werden zur Beeinflussung des Programmablaufs verarbeitet.

Aufgabe der Erfindung ist es, eine Vorrichtung der eingangs genannten Art vorzuschlagen, mit der ein an sich nicht selbstanlaufender Einphasen-Synchronmotor in richtiger Drehrichtung startbar ist, ohne daß ein Sensor nötig ist, der die Lage des Rotors erfaßt.

Erfindungsgemäß ist obige Aufgabe durch die Merkmale des kennzeichnenden Teils des Anspruchs 1 gelöst.

Die Vorrichtung veranlaßt beim Einschalten wenigstens folgende Vorgänge:
a) Bei zunächst in einer unbestimmten Stellung stillstehendem Rotor wird die eine Wicklung (Statorwicklung oder Hilfswicklung) mit wenigstens einem, vorzugsweise mehreren Spannungspulsen der einen Polarität der Wechselspannung beaufschlagt. Der Rotor wird dadurch in eine von zwei definierten Stellungen gedreht. Anschließend wird die andere Wicklung mit Spannungspulsen einer Polarität der Wechselspannung beaufschlagt. Der Rotor wird dadurch in eine bestimmte, gewünschte Startposition gedreht.
b) Anschließend wird der Rotor durch je nach der gewünschten Drehrichtung gewählte Spannungspulse der einen oder anderen Polarität in Drehung versetzt.
c) Sobald der Rotor dreht, mißt die Steuerelektronik die bei drehendem Rotor in die stromlos geschaltete Hilfswicklung und/oder Statorwicklung induzierte Spannung (EMK) und steuert den Schalter der einen und/oder anderen Wicklung derart an, daß ein Drehmoment in der gewünschten Drehrichtung entsteht, wobei der Rotor auf Synchrondrehzahl hochläuft.

Ein Drehmoment in der gewünschten Drehrichtung entsteht dann, wenn die induzierte Spannung und die jeweilige Netzhalbwelle bzw. der entsprechende Strom die gleiche Polarität haben. Von der Steuerelektronik kann auch die Steigung der induzierten Spannung (EMK) ausgewertet werden, um das Hochlaufen des Motors auf Synchrondrehzahl noch besser regeln zu können.

Vorteilhafte Ausgestaltungen der Erfindung ergeben sich aus den Unteransprüchen und der folgenden Beschreibung.

Der durch die erfindungsgemäße Vorrichtung gesteuerte Motor eignet sich beispielsweise für Wasserpumpen mit einer Leistung >50 Watt. Dabei kann der Motor so aufgebaut sein, daß sein Pumpenflügel tragender Rotor direkt im Wasser läuft, so daß eine Abdichtung der Motorwelle überflüssig ist. Da kein Motor-Stellungssensor nötig ist, arbeitet die Vorrichtung stabil und der Motor benötigt nur drei Anschlußleitungen. Weitere Vorteile eines derartig gesteuerten Motors sind hoher Wirkungsgrad, geringe Geräuschentwicklung, die Möglichkeit der Einstellung von verschiedenen Drehzahlen und Drehrichtungen, sowie eine lange, wartungsfreie Lebensdauer.

Durch die Erfassung der induzierten Spannung (EMK) ist es auch möglich, weitere Betriebszustände, insbesondere Störungen auszuwerten. Hierauf beziehen sich Unteransprüche.

Ausführungsbeispiele der Erfindung sind anhand der Zeichnung beschrieben. In dieser zeigen:
Figur 1 ein Blockschaltbild einer ersten Ausführung,
Figur 2 ein Blockschaltbild einer zweiten Ausführung,
Figur 3 ein Blockschaltbild einer dritten Ausführung,
Figur 4 ein Blockschaltbild einer vierten Ausführung,
Figur 5 schematisch Rotorpositionen a bis f des Motors,
Figur 6 Strompulse für das Einstellen einer Startposition,
Figur 7 an die Statorwicklung bzw. die Hilfswicklung geschaltete Spannungspulse,
Figur 8 die induzierte Spannung und einen Wicklungsstrom.

Ein Einphasen-Synchronmotor 1, der beispielsweise dem Antrieb einer Wasserpumpe einer Geschirrspülmaschine dient, weist einen permanentmagnetischen Rotor 2 und eine Statorwicklung 3 sowie eine Hilfswicklung 4 auf. Die Hilfswicklung 4 kann kleiner als die Statorwicklung aufgebaut sein, da sie nur während kurzer Zeiten leitend geschaltet wird.

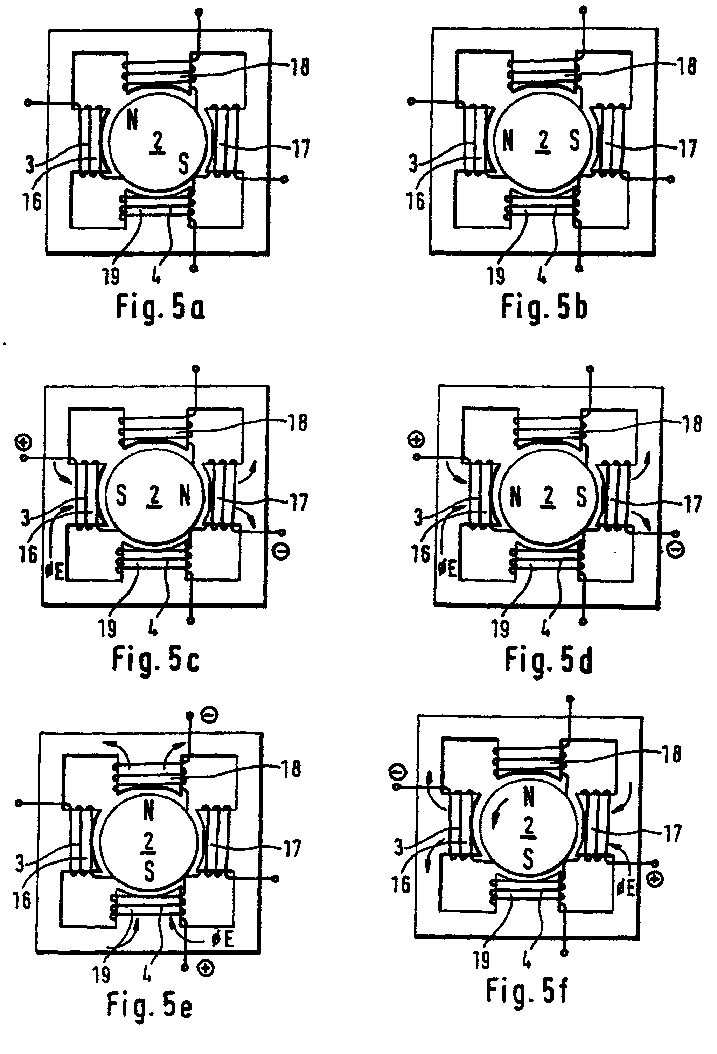

Die Statorwicklung 3 ist über einen elektronischen Schalter 5, insbesondere Triac, an das Wechselstromnetz 6 schaltbar. Die Hilfswicklung 4 ist über einen elektronischen Schalter 7, insbesondere Triac, an das Wechselstromnetz 6 schaltbar. Die Statorwicklung 3 und die Hilfswicklung 4 sind um etwa 90° gegeneinander versetzt (vgl. Fig.5).

Die Schalter 5 und 7 steuert eine Steuerelektronik 8, die beispielsweise mit einem Mikroprozessor bzw.
Mikrocontroller arbeitet und Teil einer Programmsteuereinrichtung sein kann.

Einem Eingang der Steuerelektronik 8 ist ein Differenzverstärker 9 vorgeschaltet. Dieser bildet die an der Hilfswicklung 4 abfallende Spannung nach.

Wenn der Schalter 7 sperrt, ist der Strom 14 durch die Hilfswicklung 4 gleich Null. Wenn der Rotor 2 dreht, wird in die Hilfswicklung 4 eine Spannung entsprechend der EMK (elektromotorische Kraft) induziert. Deren Polarität und/oder Steigung wird von der Steuerelektronik 8 ausgewertet.

Auch wenn beide Schalter 5, 7 offen sind, bleibt der Rotor 2 nicht sofort stehen, sondern dreht aufgrund seiner Massenträgheit weiter, wobei die sich daraus ergebende induzierte Spannung erfaßbar ist.

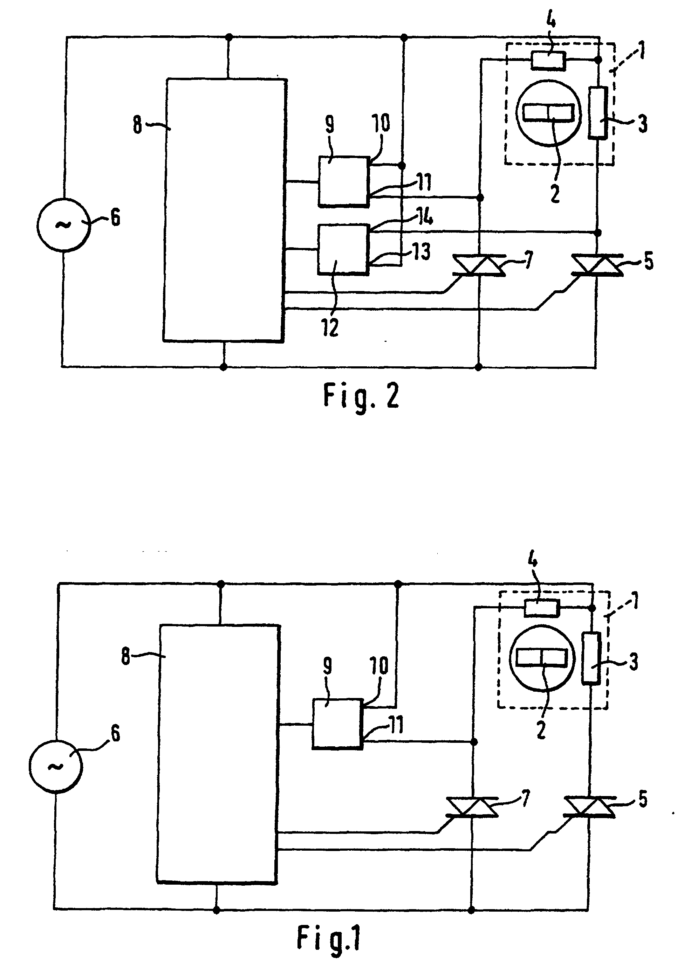

Gegenüber dem Ausführungsbeispiel nach Figur 1 wird beim Ausführungsbeispiel nach Figur 2 auch die in der Statorwicklung 3 induzierte Spannung erfaßt. Hierfür ist ein weiterer Differenzverstärker 12 vorgesehen, dessen einer Eingang 13 am Wechselstromnetz 6 und dessen anderer Eingang 14 zwischen der Statorwicklung 3 und dem Schalter 5 liegt.

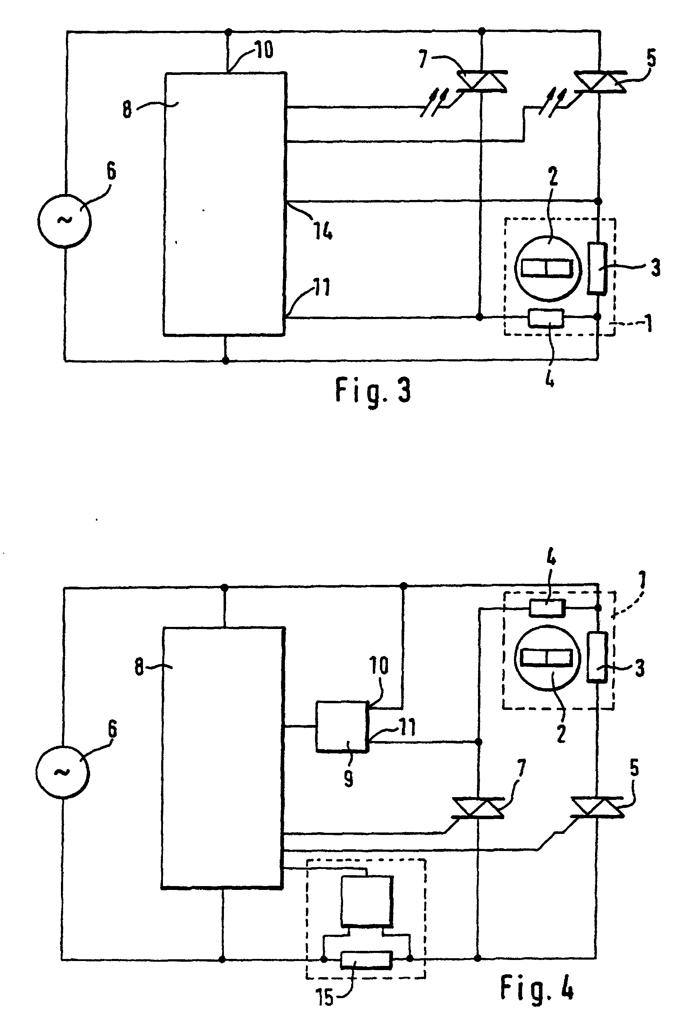

Beim Ausführungsbeispiel nach Figur 3 sind als Schalter 5,7 optisch triggerbare Triacs verwendet. Dadurch ist eine galvanische Entkopplung erreicht. Die Differenzverstärker 9,12 können dann entfallen. Die Wicklungen 3,4 liegen an Eingängen 11,14 der Steuerelektronik 8, die den Eingängen 11,14 der Figur 2 entsprechen. Die Netzspannung wird über einen Eingang 10 der Steuerelektronik 8 ausgewertet, der den Eingängen 10, 13 der Figur 2 entspricht.

Das Ausführungsbeispiel der Figur 4 gleicht dem der Figur 1, wobei zusätzlich ein den Motorstrom erfassender Stromsensor 15 vorgesehen ist, der an der Steuerelektronik 8 liegt. Dadurch kann beispielsweise ein Überstrom erfaßt werden, auf den hin die Steuerelektronik 8 eine Abschaltung vornimmt.

Der Motor 1 weist für die Statorwicklung 3 zwei Ständerpole 16,17 und für die Hilfswicklung 4 zwei Ständerpole 18,19 auf. Die Ständerpole 18,19 sind gegenüber den Ständerpolen 16,17 um etwa 90° versetzt (vgl. Fig.5). Der Luftspalt zwischen dem Rotor 2 und den Ständerpolen 16 bis 19 ist vergleichsweise groß und gleichbreit. Der Rotor 2 kann im unbestromten Zustand der Statorwicklung 3 und der Hilfswicklung 4 eine beliebige Ruheposition einnehmen. In Figur 5 zeigen a und b zwei der möglichen Ruhepositionen. In der Ruheposition b steht der Nordpol des Rotors 2 dem Ständerpol 16 gegenüber. Dementsprechend steht der Südpol des Rotors 2 dem Ständerpol 17 gegenüber. Nordpol und Südpol liegen also in der Achse der Statorwicklung 3.

Für den Start des Rotors 2 ist eine bestimmte Startposition gewünscht. Dies ist beispielsweise die Position e in Figur 5.

Aus allen Ruhepositionen wird der Rotor 2 etwa in folgender Weise in die Startpositon e gebracht:

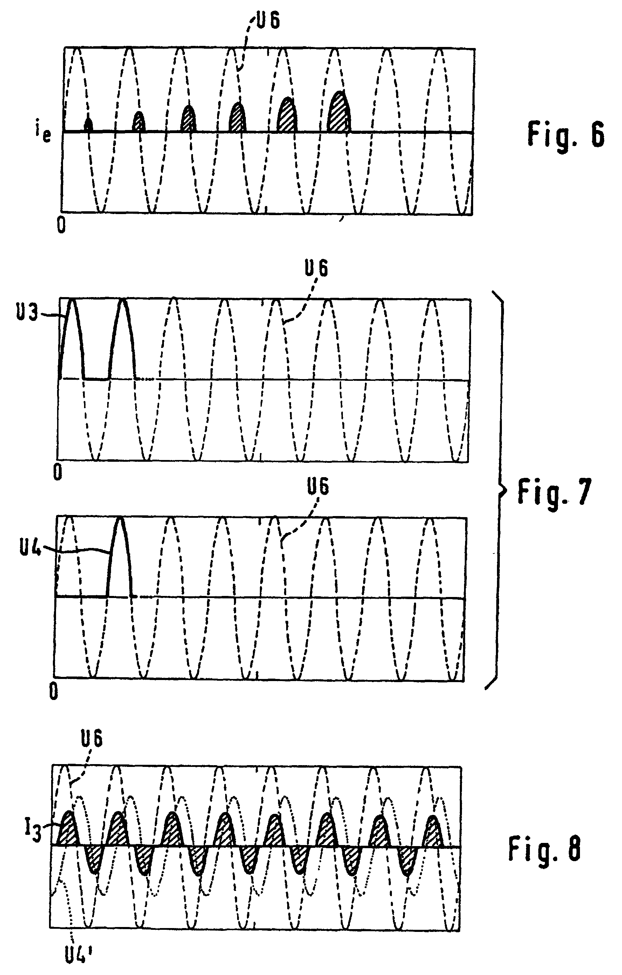

In einem ersten Schritt wird an die Statorwicklung 3 eine Anzahl von Spannungspulsen gleicher Polarität, die positiv oder negativ sein kann, dadurch gelegt, daß die Steuerelektronik 8 den Schalter 5, beispielsweise bei positiven Halbwellen, mehrmals zündet. Vorzugsweise wird dabei eine Phasenanschnittsteuerung in der Weise vorgesehen, daß die sich in der Statorwicklung 3 ergebenden Strompulse zunehmen, wie dies in Figur 6 gezeigt ist. Dieser Pulsverlauf stellt sicher, daß sich der Rotor 2 nur um wenige Grad in die Zwischenposition c oder d dreht und jedenfalls nicht umläuft. Aus der Ruheposition a wird dabei die Zwischenposition c eingenommen. Steht der Rotor 2 in der Ruheposition b, dann kann er durch die genannten Pulse nicht bewegt werden. Er bleibt also stehen, d.h. er nimmt die Zwischenposition d ein.

Nach einer kurzen Pause werden weitere Spannungspulse gleicher Polarität, die positiv oder negativ sein können, an die Hilfswicklung 4 gelegt, wofür der Schalter 7 von der Steuerelektronik 8 entsprechend geschaltet wird und der Schalter 5 offen bleibt. In der Hilfswicklung 4 treten die Strompulse der Figur 6 auf. Es schwenkt nun der Rotor 2 in die eindeutige Startposition e und zwar unabhängig davon, ob er zuvor in der Zwischenposition c oder d stand.

Ist danach dann der Start des Motors gewünscht, dann werden an die Statorwicklung 3 volle Spannungspulse (Netzhalbwellen der einen oder anderen Polarität) gelegt. Entsprechend der Polarität dieser Spannungspulse dreht der Rotor aus der Startposition e nach rechts oder links. In Figur 5f ist davon ausgegangen, daß linksdrehend gewünscht ist. Um den Rotor 2 um 180° zu drehen, genügen gewöhnlich zwei oder mehrere Spannungspulse gleicher Polarität. Die nötige Anzahl hängt von der Trägheit des Rotors ab. In Figur 7 sind zwei solcher Spannungspulse U3 in der ersten und dritten Netzhalbwelle der Netzspannung U6 an die Statorwicklung 3 gelegt. Zur Erzeugung eines zusätzlichen Drehmoments kann wenigstens ein Spannungspuls auch an die Hilfswicklung 4 gelegt werden. Dies ist in Figur 7 als U4 gezeigt. Der Spannungspuls liegt in der dritten Netzhalbwelle an der Hilfswicklung 4 an.

Die genannten Spannungspulse werden von der Steuerelektronik 8 über die Schalter 5 bzw. 7 an die betreffende Wicklung 3,4 gelegt. Dadurch ist ein gesteuerter Anlauf des Rotors 2 erreicht. Sobald der Motor 2 läuft, erfaßt die Steuerelektronik 8 die induzierte Spannung (EMK), die an der jeweiligen Wicklung 3 bzw. 4 im stromlosen Zustand meßbar ist. Bei den Ausführungsbeispielen nach den Figuren 1 und 4 ist nur die in der Hilfswicklung 4 induzierte Spannung meßbar. Bei den Ausführungsbeispielen nach den Figuren 2 und 3 sind die in beide Wicklungen 3,4 induzierten Spannungen im jeweils stromlosen Zustand auswertbar. Es wird nun die Motordrehzahl im geschlossenen Regelkreis hochgefahren. Die Steuerelektronik 8 ermittelt, ggf. im Zusammenwirken mit den Differenzverstärkern 9,12, aus der jeweiligen Höhe und/oder aus dem Verlauf der induzierten Spannung die jeweilige Rotorlage, wenn der Strom durch betreffende Wicklung Null ist. Entsprechend der errechneten Rotorlage und dem Phasenwinkel der Wechselspannung des Netzes 6 triggert die Steuerelektronik 8 den Schalter 5 oder den Schalter 5 und den Schalter 7, um ein Drehmoment in der richtigen Drehrichtung zum Erreichen der Enddrehzahl zu erhalten.

Bei der Synchrondrehzahl triggert die Steuerelektronik 8 den Schalter 5 der Statorwicklung 4 so, daß ein maximaler Wirkungsgrad erreicht wird. Figur 8 zeigt die in die Hilfswicklung 4 induzierte Spannung U4' (EMK) und den Strom 13 durch die Statorwicklung 3. Wenn die Achsen der Wicklungen 3,4 im 90°-Winkel liegen (vgl. Fig.5), dann ist der beste Wirkungsgrad erreicht, wenn der Wicklungsstrom I3 um 90° gegen die induzierte Spannung U4' phasenverschoben ist, wie dies in Figur 8 gezeigt ist. Bei der Synchrondrehzahl bleibt die Hilfswicklung 4 nichtleitend. Sie braucht daher nur auf kurze Leitphasen, nämlich das Erreichen der Startposition und den Anlauf, bemessen werden.

Abhängig von der Trägheit des Systems und der Lastcharakteristik ist es einfach möglich, den Motor bei verschiedenen Solldrehzahlen laufenzulassen. In diesem Falle errechnet die Steuerelektronik 8 aus der Frequenz der induzierten Spannung U4' die Istdrehzahl. Ist diese größer als die Solldrehzahl, triggert die Steuerelektronik 8 die Schalter 5,7 nicht. Ist die Istdrehzahl kleiner als die Solldrehzahl, werden der Schalter 5 und ggf. zusätzlich der Schalter 7 geschlossen, um ein Beschleunigungsmoment zu erhalten.

Die Steuerung des Motors kann verbessert werden, wenn die Steuerelektronik 8 mehr Informationen über den Motorstatus erhält. Nach Figur 2 werden die an beiden Wicklungen abfallenden Spannungen gemessen. Dadurch werden genauere Informationen über die Rotorposition erhalten, was das Triggern der Schalter erleichtert. Wenn die Spannung über dem Schalter 5,7 ohnehin Null ist, muß dieser Schalter nicht zurückgeschaltet werden.

In Figur 4 ist ein Stromsensor 15 vorgesehen. Mit diesem läßt sich ein Schutz gegen einen Überstrom erreichen oder auch die Regelgüte verbessern.

Die Schalter nach Figur 3 sind galvanisch entkoppelt. Dadurch läßt sich auf einfache Weise die an den Wicklungen abfallende Spannung messen.

In der Steuerelektronik 8 können Kenndaten des Motors 1 und der anzutreibenden Last gespeichert sein. Über die Stromimpulsdauer (Leiten des Schalters 5), die bei hohem Wirkungsgrad eingestellt wird, kann der jeweilige Belastungszustand des Motors 1 erkannt werden. Es lassen sich damit durch die beschriebene Messung der induzierten Spannung des Motors auch Störzustände, beispielsweise falsche Drehrichtung oder Laufen ohne Last oder Blockieren des Motors, erfassen.

Blockiert beispielsweise eine vom Motor 1 angetriebene Pumpe eines Haushaltsgeräts, dann ist im stromlosen Zustand der Statorwicklung 3 keine induzierte Spannung meßbar, weil der Rotor 2 nicht weiterdreht, obwohl dies die Steuerelektronik 8 an sich erwartet. Die Steuerelektronik 8 kann hierauf zur Behebung der Störung besondere Maßnahmen einleiten. Beispielsweise kann sie die Pumpe in Inversrichtung starten, um deren Blockierung zu beseitigen. Es ist auch möglich, daß die Steuerelektronik 8, wenn sie eine Blockierung der Pumpe erfaßt, einen Neustart der Pumpe aktiviert.

Ähnlich kann die Steuerelektronik 8, wenn sie ein Leerlaufen der Pumpe erfaßt, das sich auf die im stromlosen Zustand meßbare induzierte Spannung auswirkt, ein Abschalten des Motors 2 und/oder die Aktivierung eines anderen Aggregats, das dem Leerlaufen entgegenwirkt - beispielsweise Wassernachfüllen -, veranlassen.

Auch bei einer Überlast des Motors 1 ist eine ungewöhnliche Änderung der im stromlosen Zustand gemessenen induzierten Spannung gegeben. Die Steuerelektronik 8 kann hier auch in der beschriebenen Weise dadurch reagieren, daß sie den Motor 1 stoppt und/ oder ein anderes Aggregat der Maschine aktiviert, was dieser Störung entgegenwirkt.

## Patentansprüche

1. Vorrichtung zum Steuern des Anlaufs und des Betriebs eines nicht selbstanlaufenden Binphasen-Synchronmotors mit mindestens einer Statorwicklung, die über einen von einer Steuerelektronik gesteuerten Schalter an die Wechselspannung eines Netzes schaltbar ist, mit einer Hilfswicklung, die über einen weiteren von der Steuerelektronik gesteuerten Schalter an die Wechselspannung schaltbar ist, und mit einem permanentmagnetischen Rotor,
**dadurch gekennzeichnet,**
**daß** die Steuerelektronik(8) wenigstens die jeweilige Polarität der Wechselspannung(6) und im stromlosen Zustand der Statorwicklung(3) und/oder der Hilfswicklung (4) die bei trägheitsbedingt nachlaufendem Rotor(2) des Motors(1) in die Hilfswicklung(4) und/oder die Statorwicklung(3) induzierte Spannung (EMK) erfaßt,
**daß** die Steuerelektronik(8) den Rotor(2) in eine definierte Startposition bringt,
**daß** die Steuerelektronik(8) zum Anlauf des Rotors(2) über den Schalter(5) einen oder mehrere Spannungspulse der einen oder anderen Polarität der Wechselspannung(6) an die Statorwicklung(3) legt - abhängig von der gewünschten Drehrichtung - und
**daß** die Steuerelektronik(8) zum Hochlauf des Rotors(2) auf Synchrondrehzahl den Schalter(5) jeweils dann schließt, wenn die erfaßte induzierte Spannung und die jeweilige Netzspannungshalbwelle in einem derartigen Verhältnis stehen, daß ein Drehmoment in der gewünschten Drehrichtung entsteht.

2. Vorrichtung nach Anspruch 1,
**dadurch gekennzeichnet,**
**daß** zum Erreichen der definierten Startposition des Rotors(2) die Steuerelektronik(8) eine oder mehreren Spannungspulse der einen Polarität der Wechselspannung(6) an eine der Wicklungen(3,4) legt und nach einer Pause einen oder mehrere Spannungspulse einer Polarität der Wechselspannung(6) an die andere Wicklung(4,3) legt.

3. Vorrichtung nach Anspruch 1 oder 2,
**dadurch gekennzeichnet**,
die Steuerelektronik(8) zum Anlauf des Rotors(2) auch wenigstens einen Spannungspuls an die Hilfswicklung(4) legt.

4. Vorrichtung nach einem der vorhergehenden Ansprüche,
**dadurch gekennzeichnet,**
**daß** die Steuerelektronik(8) zum Hochlauf des Rotors(2) auf Synchrondrehzahl den Schalter(5) jeweils dann schließt, wenn die Steigung der induzierten Spannung bezogen auf die jeweilige Netzspannungshalbwelle derart ist, daß ein Drehmoment in der gewünschten Drehrichtung entsteht.

5. Vorrichtung nach einem der vorhergehenden Ansprüche,
**dadurch gekennzeichnet,**
**daß** die Steuerelektronik(8) im Synchronlauf des Motors(1) diesen durch Erfassen der induzierten Spannung auf maximalen Wirkungsgrad optimiert.

6. Vorrichtung nach einem der vorhergehenden Ansprüche,
**dadurch gekennzeichnet,**
**daß** wenigstens einer der Schalter(5,7) galvanisch isoliert triggerbar ist.

7. Vorrichtung nach einem der vorhergehenden Ansprüche,
**dadurch gekennzeichnet,**
**daß** die Steuerelektronik(8) die über die Schalter(5,7) abfallende Spannung erfaßt.

8. Vorrichtung nach einem der vorhergehenden Ansprüche,
**dadurch gekennzeichnet,**
**daß** mittels der Steuerelektronik(8) der Motor(1) auf unterschiedliche Drehzahlen bringbar ist.

9. Vorrichtung nach einem der vorhergehenden Ansprüche,
**dadurch gekennzeichnet,**
**daß** die Steuerelektronik(8) aus den sich aus im Synchronlauf ergebenden Strompulsen und/oder der gemessenen EMK den Belastungszustand des Motors(1) ermittelt und hierauf reagierende Maßnahmen einleitet.

10. Vorrichtung nach einem der vorhergehenden Ansprüche, wobei der Rotor(2) eine Pumpe einer Haushaltsmaschine antreibt,
**dadurch gekennzeichnet,**
**daß** dann, wenn infolge einer Blockierung der Pumpe die erwartete induzierte Spannung nicht auftritt, die Steuerelektronik(8) eine kurzzeitige Drehrichtungsumkehr der Pumpe einleitet und/oder einen Neustart des Motors(1) einleitet.

11. Vorrichtung nach einem der vorhergehenden Ansprüche,
**dadurch gekennzeichnet,**
**daß** die Steuerelektronik(8) einen Leerlauf und/oder eine Überlast des Motors(1) über die sich ändernde induzierte, im stromlosen Zustand gemessene Spannung erfaßt und entgegenwirkende Steuerungsmaßnahmen ausführt.

## Claims

1. Apparatus for controlling the start-up and operation of a non-self-starting single-phase synchronous motor, comprising: at least one stator winding, which can be connected to the alternating voltage of a mains supply via a switch controlled by an electronic control mechanism; an auxiliary winding, which can be connected to the alternating voltage by way of another switch controlled by the electronic control mechanism; and a permanent magnetic rotor,
**characterized in that**
the electronic control mechanism (8) detects at least the actual polarity of the alternating voltage (6) and, in the no-current state of the stator winding (3) and/or of the auxiliary winding (4), it detects the voltage (EMF) induced in the auxiliary winding (4) and/or the stator winding (3) with inertia-related continued running of the rotor (2) of the motor (1),
**in that** the electronic control mechanism (8) brings the rotor (2) into a specific starting position,
**in that**, for the start-up of the rotor (2), the electronic control mechanism (8) applies one or more voltage pulses of one or other polarity of the alternating voltage (6) - depending on the desired direction of rotation - to the stator winding (3) via the switch (5), and
**in that**, for the run-up or acceleration of the rotor (2) to synchronous speed, the electronic control mechanism (8) closes the switch (5) whenever the detected induced voltage and the actual mains voltage half-wave are at such a ratio, that a torque is produced in the desired direction of rotation.

2. Apparatus according to Claim 1,
**characterized in that,**
for achieving the specific starting position of the rotor (2), the electronic control mechanism (8) applies one or more voltage pulses of one polarity of the alternating voltage (6) to one of the windings (3, 4) and, after a pause, applies one or more voltage pulses of one polarity of the alternating voltage (6) to the other winding (4, 3).

3. Apparatus according to Claim 1 or 2,
**characterized in that**,
for the start-up of the rotor (2), the electronic control mechanism (8) also applies at least one voltage pulse to the auxiliary winding (4).

4. Apparatus according to one of the preceding claims,
**characterized in that**,
for the run-up or acceleration of the rotor (2) to synchronous speed, the electronic control mechanism (8) closes the switch (5) whenever the gradient of the induced voltage in relation to the actual mains voltage half-wave is such that a torque is produced in the desired direction of rotation.

5. Apparatus according to one of the preceding claims,
**characterized in that**,
during synchronous running of the motor (1), the electronic control mechanism (8) optimises this for maximum efficiency by detecting the induced voltage.

6. Apparatus according to one of the preceding claims,
**characterized in that**
at least one of the switches (5, 7) can be triggered in a galvanically isolated manner.

7. Apparatus according to one of the preceding claims,
**characterized in that**,
the electronic control mechanism (8) detects the voltage dropping across the switches (5, 7).

8. Apparatus according to one of the preceding claims,
**characterized in that**,
the motor (1) can be brought to different speeds by means of the electronic control mechanism (8).

9. Apparatus according to one of the preceding claims,
**characterized in that**,
the electronic control mechanism (8) determines the load condition of the motor (1) from the current pulses occurring during synchronous running and/or from the measured EMF, and initiates measures in response to this.

10. Apparatus according to one of the preceding claims,
in which the rotor (2) drives a pump of a domestic appliance,
**characterized in that**
when, as the result of a blockage in the pump, the expected induced voltage does not occur, the electronic control mechanism (8) initiates a brief reversal of the direction of rotation of the pump and/or initiates restarting of the motor (1).

11. Apparatus according to one of the preceding claims,
**characterized in that**
the electronic control mechanism (8) detects idling and/or overloading of the motor (1) by way of the fluctuating induced voltage measured in the no-current state, and takes counteracting control measures.

## Revendications

1. Dispositif de commande du démarrage et du fonctionnement d'un moteur synchrone monophasé ne démarrant pas automatiquement, avec au moins un enroulement de stator qui peut être relié, par un interrupteur commandé par une électronique de commande, à la tension alternative d'un réseau, avec un enroulement auxiliaire qui peut être relié, par un autre interrupteur commandé par l'électronique de commande, à la tension alternative, et avec un rotor magnétique permanent, **caractérisé en ce que** l'électronique de commande (8) détecte au moins la polarité respective de la tension alternative (6) et, à l'état non parcouru par un courant de l'enroulement de stator (3) et/ou de l'enroulement auxiliaire (4), la tension (force électromotrice) induite dans l'enroulement auxiliaire (4) et/ou l'enroulement de stator (3), lorsque le rotor (2) du moteur (1) continue de tourner par inertie, **en ce que** l'électronique de commande (8) amène le rotor (2) dans une position de démarrage définie, **en ce que** pour le démarrage du rotor (2) par l'interrupteur (5), l'électronique de commande (8) applique une ou plusieurs impulsions de tension de l'une ou de l'autre polarité de la tension alternative (6) à l'enroulement de stator (3), suivant le sens de rotation voulu - et **en ce que**, pour faire passer le rotor (2) à la vitesse de rotation synchrone, l'électronique de commande (8) ferme l'interrupteur (5) lorsque la tension induite détectée et la demi-onde respective de tension du réseau se trouvent dans un rapport tel qu'il se produit un couple de rotation dans le sens de rotation voulu.

2. Dispositif selon la revendication 1, **caractérisé en ce que** pour obtenir la position de démarrage définie du rotor (2), l'électronique de commande (8) applique une ou plusieurs impulsions de tension d'une polarité de la tension alternative (6), à l'un des enroulements (3, 4), et après une pause, elle applique une ou plusieurs impulsions de tension d'une polarité de la tension alternative (6), à l'autre enroulement (4, 3).

3. Dispositif selon la revendication 1 ou 2, **caractérisé en ce que** pour le démarrage du rotor (2), l'électronique de commande (8) applique au moins aussi une impulsion de tension à l'enroulement auxiliaire (4).

4. Dispositif selon l'une des revendications précédentes, **caractérisé en ce que** pour faire passer le rotor (2) à la vitesse de rotation synchrone, l'électronique de commande (8) ferme l'interrupteur (5) lorsque la pente de la tension induite, rapportée à la demi-onde respective de la tension du réseau, est telle qu'il se produit un couple de rotation dans le sens de rotation voulu.

5. Dispositif selon l'une des revendications précédentes, **caractérisé en ce que** pendant la marche synchrone du moteur (1), l'électronique de commande (8) optimalise celle-ci sur le rendement maximal, par détection de la tension induite.

6. Dispositif selon l'une des revendications précédentes, **caractérisé en ce qu'**au moins l'un des interrupteurs (5, 7) peut être déclenché de manière isolée galvaniquement.

7. Dispositif selon l'une des revendications précédentes, **caractérisé en ce que** l'électronique de commande (8) détecte la tension chutant à travers les interrupteurs (5, 7).

8. Dispositif selon l'une des revendications précédentes, **caractérisé en ce que** le moteur (1) peut être amené sur différentes vitesses de rotation, au moyen de l'électronique de commande (8).

9. Dispositif selon l'une des revendications précédentes, **caractérisé en ce que** l'électronique de commande (8) détermine, à partir des impulsions de courant qui se produisent en marche synchrone et/ou de la force électromotrice mesurée, l'état de charge du moteur (1) et déclenche des moyens réagissant à ceci.

10. Dispositif selon l'une des revendications précédentes, dans lequel le rotor (2) entraîne une pompe d'un appareil électroménager, **caractérisé en ce que**, si à la suite d'un blocage de la pompe, la tension induite attendue ne se produit pas, l'électronique de commande (8) amorce une inversion de courte durée du sens de rotation de la pompe et/ou amorce un redémarrage du moteur (1).

11. Dispositif selon l'une des revendications précédentes, **caractérisé en ce que** l'électronique de commande (8) détecte une marche à vide et/ou une surcharge du moteur (1) à travers la tension induite qui varie et qui est mesurée à l'état non parcouru par un courant, et exécute des moyens de commande d'action contraire.
